# EUROPÄISCHE PATENTSCHRIFT

(11) **EP 3 758 104 B1**
(45) Veröffentlichungstag und Bekanntmachung des Hinweises auf die Patenterteilung: **06.07.2022**
(21) Anmeldenummer: 20175852.1
(22) Anmeldetag: 20.05.2020
(51) Int. Cl.: H01M 4/04, B23K 26/06, B23K 26/08, B23K 26/38

(54) **VERFAHREN ZUR HERSTELLUNG VON BATTERIEELEKTRODEN**
METHOD FOR PRODUCING BATTERY ELECTRODES
PROCÉDÉ DE FABRICATION D'ÉLECTRODES DE BATTERIE

(30) Priorität: 25.06.2019 DE 102019209183
(43) Veröffentlichungstag der Anmeldung: 30.12.2020
(73) Patentinhaber: VOLKSWAGEN AG, 38440 Wolfsburg (DE)
(72) Erfinder: BREUER, Alexander, 29227 Celle (DE); BÖHM, Dennis, 38302 Wolfenbüttel (DE); JORDAN, Marco, 38229 Salzgitter (DE)
(74) Vertreter: FDST Patentanwälte

(56) Entgegenhaltungen:
- CN-A- 104 942 445
- DE-A1-102017 216 138
- DE-A1-102017 216 213
- JP-A- 2017 084 691
- US-A1- 2018 079 035

## Beschreibung

Die Erfindung betrifft ein Verfahren zur Herstellung von Batterieelektroden, bei welchem ein Elektrodenbandmaterial mit einer Folie und mit einer darauf aufgebrachten Aktivmaterialbeschichtung an vorgegebenen Schnittstellen zu einer Anzahl von Batterieelektroden vereinzelt wird. Die Erfindung betrifft weiterhin eine Vorrichtung zur Durchführung des Verfahrens.

Elektrisch antreibbare oder angetriebene Kraftfahrzeuge, wie beispielsweise Elektro- oder Hybridfahrzeuge, weisen typischerweise einen Elektromotor als Antriebsmaschine auf, welcher zur Versorgung mit elektrischer Energie an einen fahrzeuginternen elektrischen (Hochvolt-)Energiespeicher gekoppelt ist. Derartige Energiespeicher sind beispielsweise in Form von (Fahrzeug-)Batterien ausgeführt.

Unter einer elektrochemischen Batterie ist hierbei insbesondere eine sogenannte sekundäre Batterie (Sekundärbatterie) des Kraftfahrzeugs zu verstehen, bei welcher eine verbrauchte chemische Energie mittels eines elektrischen (Auf-)Ladevorgangs wiederherstellbar ist. Derartige Batterien sind insbesondere als elektrochemische Akkumulatoren, beispielsweise als Lithium-Ionen-Akkumulatoren, ausgeführt. Zur Erzeugung oder Bereitstellung einer ausreichend hohen Betriebsspannung weisen solche Batterien typischerweise mehrere einzelne Batteriezellen auf, welche modular verschaltet sind.

Batterien der genannten Art weisen auf einer Batteriezellebene eine Kathode und eine Anode sowie einen Separator und einen Elektrolyten auf. Die Elektroden, also die Anode sowie die Kathode, sind aus einem jeweiligen (Elektroden-)Aktiv-material hergestellt.

Zur Herstellung von Batterien sind beispielsweise Extrusionsverfahren möglich, bei welchen die Batterieelektroden der Batteriezellen aus einer plastischen Masse hergestellt werden. Die Elektrodenpasten werden hierbei als Aktivmaterialbeschichtung auf einen jeweiligen Stromableiter, insbesondere auf eine Kupfer- oder Aluminiumfolie, aufgetragen. Dadurch wird ein streifen- oder bandförmiges Elektrodenbandmaterial oder Elektrodensubstrat hergestellt, welches insbesondere als Endlosmaterial oder Rollenmaterial, als sogenannter Elektrodenwickel (Elektrodencoil), konfektioniert und weiter verarbeitet wird. Das endlose Elektrodenbandmaterial weist hierbei eine Länge auf, welche wesentlich größer dimensioniert ist, als dessen Breite oder Dicke beziehungsweise Höhe.

Aus dem Elektrodenbandmaterial wird anschließend eine Anzahl von Batterieelektroden hergestellt. Hierzu wird das Elektrodenbandmaterial an vorgegebenen Schnittstellen vereinzelt, also abgetrennt oder abgelängt. Die Schnittstellen verlaufen hierbei insbesondere entlang der Breite des Elektrodenbandmaterials. Dies bedeutet, dass die Schnittstellen im Wesentlichen quer oder transversal zur Längsrichtung des endlosen Elektrodenbandmaterials gerichtet sind.

Die Vereinzelung der Batterieelektroden erfolgt beispielsweise mechanisch, insbesondere mittels eines Stanzverfahrens, oder mittels eines Laserstrahls.

Bei einer mechanischen Vereinzelung ist es beispielsweise möglich, dass die Batterieelektroden mit einem Vollschnitt vom Elektrodenbandmaterial getrennt werden, oder dass die Batterieelektroden in einem zweitgeteilten Trennverfahren, mit einer Einkerbung (Notching) einer Ober- und Unterkante der Schnittstelle und mit einem darauffolgenden Transversalschnitt zur vollständigen Durchtrennung, getrennt werden.

Bei einer Laservereinzelung wird ein Laserstrahl beispielsweise mit einem (Galvo-)Scanner über die Schnittstelle geführt. Der Laserstrahl ablatiert hierbei die Aktivmaterialbeschichtung sowie die Folie. Unter "ablatieren" oder "Ablation" ist hierbei insbesondere eine Laser-Ablation zu verstehen, bei welcher ein Laserstrahl ein Material lokal derart erwärmt, dass ein Plasma entsteht, und das Material durch die Aufheizung abgetragen wird. Der Laserstrahl wird hierbei auf das Elektrodenbandmaterial fokussiert, wobei in einer Wärmeeintragszone oder einer Wärmeeinflusszone das Material abgetragen, und somit die Schnittstelle durchtrennt wird.

Das Elektrodenbandmaterial wird zur Vereinzelung beispielsweise mittels einer Fördereinrichtung entlang seiner Längsrichtung zu einem Bearbeitungs- oder Schneidbereich geführt. Anschließend wird die Fördereinrichtung angehalten, so dass das Elektrodenbandmaterial bei einem Stillstand der Fördereinrichtung mechanisch oder mittels Laser an der jeweiligen Schnittstelle vereinzelt wird. Anschließend wird die Fördereinrichtung wieder gestartet, und somit die vereinzelte Batterieelektrode von dem Schneidbereich weg bewegt, und eine neue Schnittstelle des Elektrodenbandmaterials zum Schneidbereich hin bewegt.

Die Folie beziehungsweise der Stromableiter des Elektrodenbandmaterials ist vergleichsweise dünn, und weist beispielsweise eine Foliendicke von lediglich etwa 6 bis 12 µm (Mikrometer) auf. Durch das regelmäßige oder periodische, also getaktete Anhalten und Starten der Fördereinrichtung im Zuge der Vereinzelung wirken Beschleunigungskräfte auf das Elektrodenbandmaterial, welche zu einer Beschädigung der Folie und/oder des Aktivmaterials führen können. Um dennoch die Taktzeit zu reduzieren, und eine wirtschaftliche Fertigung darzustellen, ist es notwendig, die Beschleunigungs- und Abbremsgeschwindigkeiten der Fördereinrichtung zu reduzieren, wodurch die Zeitdauer zur Herstellung der Batterieelektroden nachteilig beeinflusst wird.

Bei einer Laservereinzelung ist ein Stillstand der Fördereinrichtung notwendig, da typische Scanner zur Bewegung des Laserstrahls entlang der Schnittstelle vergleichsweise geringe Laservorschubgeschwindigkeiten im Bereich von 6 m/s (Meter pro Sekunde) bei einem Spiegeldurchmesser von 50 mm (Millimeter) aufweisen. Durch die langsamen Laservorschubgeschwindigkeiten bekannter Scanner muss die Fördereinrichtung bei der Vereinzelung angehalten werden, um einerseits eine hohe Schnittkantenqualität zu realisieren, und um andererseits die Fördereinrichtung nicht zu beschädigen oder zu zerstören. Der Schneidbereich ist hierbei in der Regel als ein Schneid- oder Schnittspalt mit einer beidseitigen Absaugung für das ablatierte Material ausgebildet.

Zur Realisierung leistungsstärkerer Batterien oder Batteriezellen sind insbesondere Batterieelektroden mit vergleichsweise großen Abmessungen gewünscht. Daher ist eine Vereinzelung von Elektrodenbandmaterialen mit einer zunehmend größeren Breite, und somit längeren Schnittstellen, notwendig. Dadurch ist es beim Laservereinzeln notwendig, mit dem Scanner einen größeren Bearbeitungsbereich abzudecken. Dies bedingt einen größeren Spotdurchmesser oder Fokusbereich des Laserstrahls, und somit eine entsprechend größere Wärmeeintragszone, wodurch mehr Energie in die Aktivmaterialbeschichtung eingetragen wird. Dadurch wird jedoch die Schnittkantenqualität der Batterieelektrode nachteilig reduziert. Des Weiteren ist somit, insbesondere bei sogenannten on-the-fly-Schnitten, ein größerer Schneidspalt, insbesondere eine größere lichte Weite des Schneidspalts, beispielsweise bis zu 100 mm, notwendig, wodurch das Problem einer Durchbiegung des Elektrodenbandmaterials beziehungsweise der Schnittstelle im Bereich des Schneidspalts auftritt. Aufgrund der Durchbiegung befinden sich die Aktivmaterialbeschichtung und die Folie einerseits nicht mehr im Fokusbereich des Laserstrahls, wodurch die Schnittkantenqualität der vereinzelten Batterieelektroden weiter reduziert wird. Andererseits stellt eine solche Durchbiegung eine hohe mechanische Belastung für das Elektrodenbandmaterial da, wodurch Beschädigungen oder Zerstörungen des Elektrodenbandmaterials auftreten können.

Aus der DE 10 2017 216 133 A1 und aus der WO 2018/228770 A1 ist jeweils ein Verfahren zum Trennen eines bandförmigen Elektrodenmaterials auf einer gekrümmten Oberfläche offenbart. Die gekrümmte Oberfläche ist Teil eines Rades oder einer Trommel, welche in Umfangsrichtung in einzelne Umfangssegmente unterteilt ist, wobei zwischen je zwei Umfangssegmenten ein Schneid- oder Schnittspalt gebildet ist. Das Rad ist eine Fördereinrichtung für das Elektrodenmaterial, wobei die Umfangssegmente mittels eines Vakuums oder einer Blasluft das geführte Elektrodenbandmaterial halten oder fixieren. An der Umfangsfläche des Rades ist ein Laser zur Vereinzelung oder Abtrennung des am Umfangssegment fixierten Abschnitts des Elektrodenmaterials vorgesehen.

Aufgrund des transversal oder rechtwinkelig durchzuführenden Laserschnittes auf der sich bewegenden, gekrümmten Oberfläche, ist es notwendig, den Laser beziehungsweise den Fokuspunkt des Laserstrahls in X-, Y- und Z-Richtung nachzuführen, beispielsweise mittels einer Kombination von Polygon- oder Galvo-Scannern. Insbesondere bei der Herstellung von größer dimensionierten Batterieelektroden sind die bekannten Verfahren heutzutage nicht umsetzbar oder realisierbar, da der Laserstrahl mittels eines Galvo-Scanners nicht schnell genug entlang der Z-Richtung nachstellbar ist, während sich das Rad oder die Trommel dreht.

Aus der US 2018/0079035 A1 und der JP 2017-84691 A sowie der CN 104942445 A und der DE 10 2017 216 213 A1 sind Vorrichtungen zur Herstellung von Batterieelektroden bekannt, bei welchen die Batterieelektroden mittels Laserstrahlen aus einem Elektrodenbandmaterial geschnitten werden.

Der Erfindung liegt die Aufgabe zugrunde, ein besonders geeignetes Verfahren zur Herstellung von Batterieelektroden anzugeben. Insbesondere soll ein möglichst gleichmäßiger Produktionsfluss realisiert werden, bei welchem die mechanische und thermische Beanspruchung des Elektrodenbandmaterials reduziert, und eine möglichst hohe Schnittkantenqualität der Batterieelektroden gewährleistet wird. Der Erfindung liegt weiterhin die Aufgabe zugrunde, eine besonders geeignete Vorrichtung zur Durchführung eines solchen Verfahrens sowie eine besonders geeignete Fahrzeugbatterie mit einer nach einem derartigen Verfahren hergestellten Batterieelektrode anzugeben.

Die Aufgabe wird hinsichtlich des Verfahrens mit den Merkmalen des Anspruchs 1 und hinsichtlich der Vorrichtung mit den Merkmalen des Anspruchs 6 erfindungsgemäß gelöst. Vorteilhafte Ausgestaltungen und Weiterbildungen sind Gegenstand der jeweiligen Unteransprüche. Die im Hinblick auf das Verfahren angeführten Vorteile und Ausgestaltungen sind sinngemäß auch auf die Vorrichtung und/oder die Fahrzeugbatterie übertragbar und umgekehrt.

Das erfindungsgemäße Verfahren ist zur Herstellung von Batterieelektroden, insbesondere für Fahrzeugbatterien, geeignet und ausgestaltet. Verfahrensgemäß wird hierbei ein band- oder streifenförmiges Elektrodenbandmaterial, insbesondere in Form eines Rollenmaterials (Elektrodencoil, Elektrodenwickel), mit einer elektrisch leitfähigen Folie als Stromableiter und mit einer darauf aufgebrachten Aktivmaterialbeschichtung, an vorgegebenen Schnittstellen zu einer Anzahl von Batterieelektroden vereinzelt, also abgetrennt oder abgelängt.

Verfahrensgemäß wird das Elektrodenbandmaterial auf einem planaren oder ebenen, also nicht gekrümmten, Vakuumband als Förder- oder Transfereinrichtung entlang einer Förderrichtung zu einem ortsfesten Schneidspalt gefördert. Dies bedeutet, dass das Elektrodenbandmaterial von dem Vakuumband als Bahnware zum Schneidspalt gefördert wird. Die Förderung erfolgt hierbei planar, also im Wesentlichen in einer horizontalen Ebene. Das Vakuumband erzeugt geeigneterweise einen Unterdruck, mittels welchen das Elektrodenbandmaterial, insbesondere im Bereich der Aktivmaterialbeschichtung, während der Förderung fixiert oder gehalten wird. Der Schneidspalt ist räumlich fest, dies bedeutet, dass der Schneidspalt bei der Förderung des Elektrodenbandmaterials nicht wandert oder sich bewegt, sondern sich in Bezug auf das Vakuumband an einer festen Position befindet.

In einem ersten Verfahrensschritt wird die Aktivmaterialbeschichtung einer Schnittstelle mit einem ersten Laserstrahl teilweise ablatiert, bevor die Schnittstelle den Schneidspalt erreicht. In einem darauf folgenden zweiten Verfahrensschritt werden die Aktivmaterialbeschichtung und die Folie der Schnittstelle mit einem zweiten Laserstrahl vollständig durchtrennt, wenn die Schnittstelle im Bereich des Schneidspalts ist. Dadurch ist ein besonders geeignetes Verfahren zur Herstellung von Batterieelektroden realisiert.

Dies bedeutet, dass durch den ersten Laserstrahl eine Schnittfuge oder Schnittkerbe in die Aktivmaterialbeschichtung im Bereich der vorgesehenen Schnittstelle eingebracht wird. Vorzugsweise wird hierbei während des ersten Verfahrensschritts etwa 40% bis 99% der Aktivmaterialbeschichtung ablatiert. Dadurch ist ein einfaches und schnelles Vereinzeln oder Durchtrennen des Elektrodenbandmaterials im darauffolgenden zweiten Verfahrensschritt realisiert, wenn sich die Schnittstelle über dem Schneidspalt befindet. Das Laservereinzeln erfolgt somit verfahrensgemäß in zwei aufeinanderfolgenden Schritten. Zuerst wird eine möglichst tiefe Einkerbung oder Schnittfuge in die Aktivmaterialbeschichtung eingebracht, und anschließend zur Vereinzelung oder für einen Transversalschnitt das Elektrodenbandmaterial vollständig durchtrennt oder geschnitten. Das Elektrodenbandmaterial kann hierbei zwischen den Verfahrensschritten abkühlen, so dass die thermische Belastung im Bereich der Schnittstellen vergleichsweise gering ist. Dies überträgt sich in der Folge vorteilhaft auf die Schnittkantenqualität der Batterieelektroden.

Durch das planare Vakuumband ist eine Nachführung des Laserstrahls beziehungsweise des Fokuspunkts des Laserstrahls entlang einer Z-Richtung, also senkrecht zur Oberfläche des Elektrodenbandmaterials, im Wesentlichen nicht notwendig oder zumindest wesentlich reduziert. Dadurch ist eine erhöhte Taktzeit bei der Herstellung der Batterieelektroden ermöglicht, wodurch ein gleichförmiger Produktionsfluss ermöglicht ist.

Für den ersten Verfahrensschritt ist hierbei kein Schneid- oder Schnittspalt als Unterbrechung des Vakuumbandes notwendig, da das Elektrodenbandmaterial nicht vollständig durchtrennt, sondern lediglich teilweise ablatiert wird. Der erste Laserstrahl kann somit nicht auf das Vakuumband treffen, und dieses beschädigen oder zerstören.

Die Schnittstellen verlaufen insbesondere quer, also transversal oder senkrecht, zur Längsrichtung des Elektrodenbandmaterials. Das Elektrodenbandmaterial weist hierbei beispielsweise eine Breite von mehr als 100 mm, insbesondere zwischen 300 bis 600 mm, auf. Dies bedeutet, dass die vereinzelten Batterieelektroden insbesondere eine Kantenabmessung von mehr als 100 mm, vorzugsweise zwischen 300 bis 600 mm, aufweisen.

Das Elektrodenbandmaterial weist beispielsweise entlang seiner Längsrichtung einen nicht beschichteten oder unbeschichteten Randbereich der Folie auf, also einen randseitigen Folienbereich, welcher nicht mit der Aktivmaterialbeschichtung versehen ist, aus welchen im Zuge der Herstellung der Batterieelektroden jeweils ein zugeordnetes Ableiterfähnchen zur Kontaktierung der Batterieelektrode hergestellt wird.

In einer vorteilhaften Weiterbildung werden der erste Laserstrahl und/oder der zweite Laserstrahl mittels eines Polygon-Scanners mit einem Laservorschub entlang der Schnittstelle bewegt. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können. Unter einem Laservorschub ist hierbei insbesondere eine Laserstrahlvorschubs-Geschwindigkeit zu verstehen, also die Geschwindigkeit mit welcher der erste und/oder zweite Laserstrahl über die Schnittstelle bewegt wird. Der Polygon-Scanner weist hierbei geeigneterweise einen Laservorschub beziehungsweise eine Laserstrahlvorschubs-Geschwindigkeit von 2 m/s bis 1000 m/s auf. Dadurch werden die Laserstrahlen besonders schnell über die Schnittstelle bewegt, wodurch der Wärmeeintrag, also die thermische Belastung auf das Elektrodenbandmaterial besonders niedrig ist.

Der erste und zweite Laserstrahl werden hierbei vorzugsweise von einem gemeinsamen Laser erzeugt. Dies bedeutet, dass der erste und zweite Laserstrahl beispielsweise zwei oder mehrere unterschiedliche Laserpulse des Lasers sind.

In einer geeigneten Ausführung wird der erste Laserstrahl während des ersten Verfahrensschritts mehrmals hintereinander über die Schnittstelle geführt. Dies bedeutet, dass während des ersten Verfahrensschritts eine Mehrfachüberfahrt der Schnittstelle mit dem Laserstrahl durchgeführt wird. Beispielsweise wird der erste Laserstrahl hierbei zwischen einem und 100-mal über die Schnittstelle bewegt.

Die Mehrfachüberfahrt wird hierbei vorzugsweise mit einer möglichst hohen Geschwindigkeit, also einem möglichst großen Laservorschub, durchgeführt.

Dadurch ist es möglich, die Schnittfuge oder Schnittkerbe mit einer besonders geringen oder moderaten Laserleistung zu realisieren, wodurch der Wärmeeintrag beziehungsweise die Wärmeeintragszone im Bereich der Schnittfuge oder Schnittkerbe reduziert wird. Dadurch sind bessere Kantenqualitäten der Schnittfuge oder Schnittkerbe, und somit der Batterieelektrodenkante realisierbar.

In einer zweckmäßigen Ausgestaltung wird auch der zweite Laserstrahl während des zweiten Verfahrensschritts mehrmals hintereinander über die Schnittstelle geführt. Der zweite Laserstrahl wird hierbei während des zweiten Verfahrensschritts vorzugsweise weniger häufig als der erste Laserstrahl im ersten Verfahrensschritt über die Schnittstelle bewegt. Dies bedeutet, dass die Anzahl der Mehrfachüberfahrten im zweiten Verfahrensschritt kleiner als im ersten Verfahrensschritt ist. Beispielsweise wird der zweite Laserstrahl hierbei zwischen einem und 20-mal über die Schnittstelle bewegt.

Die Mehrfachüberfahrt wird hierbei vorzugsweise ebenfalls mit einem möglichst großen Laservorschub durchgeführt. Dadurch wird die Durchtrennung, also der abtrennende Laserschnitt mit einer geringen oder moderaten Laserleistung zu realisierbar, wodurch der Wärmeeintrag beziehungsweise die Wärmeeintragszone im Bereich der Schnittkante reduziert wird. Somit ist eine besonders hohe Schnittkantenqualität der vereinzelten Batterieelektroden gewährleistet.

Des Weiteren ist durch die schnell durchgeführten Mehrfachüberfahrten, insbesondere während des ersten Verfahrensschrittes, ein besonders schmaler Schneidspalt realisierbar, also ein Schneidspalt mit einer reduzierten lichten Weite. Dadurch wird die mechanische Beanspruchung des Elektrodenbandmaterials im Bereich des Schneidspalts vorteilhaft reduziert. Insbesondere wird somit sichergestellt, dass das Elektrodenbandmaterial beziehungsweise die Schnittstelle im Bereich des Schneidspalts möglichst nicht durchhängt, wodurch das Elektrodenbandmaterial in der Ebene des Fokuspunkts des zweiten Laserstrahls gehalten wird. Somit sind auch für größere Batterieelektrodenabmessungen, also für größere Breiten des Elektrodenbandmaterials, möglichst schmale Schneidspalte realisierbar.

Durch die Mehrfachüberfahrten während des ersten und/oder zweiten Verfahrensschritts ist eine Kalt-Ablation des Elektrodenbandmaterials, also eine Ablation mit einer besonders geringen Wärmeeintragszone ermöglicht.

Zweckmäßigerweise wird das ablatierte Material des Elektrodenbandmaterials während des ersten und zweiten Verfahrensschritts abgesaugt, also mittels eines Luft- oder Blasstroms entfernt. Im Zuge der Mehrfachüberfahrten wird jeweils lediglich vergleichsweise wenig ablatiertes Material erzeugt, wodurch eine besonders einfache und zuverlässige Absaugung realisierbar ist. Insbesondere ist somit ein besonders hoher Volumenstrom bei einem reduzierten Strömungsdurchmesser ermöglicht. Dadurch wird die Qualität der hergestellten Batterieelektroden weiter verbessert.

Ein zusätzlicher oder weiterer Aspekt der Erfindung sieht vor, dass der erste Verfahrensschritt und/oder der zweite Verfahrensschritt ohne eine Unterbrechung der Förderung des Vakuumbandes durchgeführt werden. Dies bedeutet, dass der erste Verfahrensschritt und/oder der zweite Verfahrensschritt während der Förderung des Elektrodenbandmaterials ausgeführt werden. Mit anderen Worten erfolgt die Vereinzelung der Batterieelektroden ohne ein Abbremsen oder Anhalten des Vakuumbands. Die Laservereinzelung der Batterieelektroden erfolgt somit "on-the-fly", also während einer kontinuierlichen Förderung des Elektrodenbandmaterials. Die Förderung des Elektrodenbandmaterials wird als insbesondere nicht unterbrochen oder abgebremst. Dadurch werden Beschleunigungskräfte auf das Elektrodenbandmaterial im Wesentlichen vollständig vermieden. Des Weiteren ist ein besonders gleichmäßiger und zeitreduzierter Produktionsfluss bei der Herstellung der Batterieelektroden gewährleistet.

Die erfindungsgemäße Vorrichtung ist zur Herstellung von Batterieelektroden geeignet und eingerichtet. Die Vorrichtung weist ein erstes planares Vakuumband und ein zweites planares Vakuumband sowie einen dazwischen angeordneten Schneidspalt auf. Das erste Vakuumband dient zur Förderung des Elektrodenbandmaterials entlang einer Förderrichtung zum Schneidspalt, wobei das zweite Vakuum band für die Förderung und den Abtransport der vereinzelten Batterieelektroden vorgesehen ist. Die Vorrichtung weist weiterhin mindestens einen Laser zur Erzeugung eines ersten und/oder zweiten Laserstrahls zur Durchtrennung der Schnittstellen, also zur Laservereinzelung, auf. Die Vakuumbänder und der Laser sind hierbei mit einem Controller (das heißt einer Steuereinheit) gekoppelt.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, den Laser derart anzusteuern und/oder zu regeln, dass ein erster Laserstrahl die Aktivmaterialbeschichtung einer Schnittstelle mit einem ersten Laserstrahl teilweise ablatiert bevor die Schnittstelle den Schneidspalt erreicht, und dass ein zweiter Laserstrahl die Schnittstelle vollständig durchtrennt, wenn die Schnittstelle im Bereich des Schneidspalts ist.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC), gebildet sein, in dem die Funktionalität zur Durchführung des erfindungsgemäßen Verfahrens mit schaltungstechnischen Mitteln implementiert ist.

Der Laser ist beispielsweise als ein gepulster (pulsed) oder als ein kontinuierlicher (continuous wave, CW) Faserlaser ausgeführt. Der Faserlaser weist hierbei eine für die Ablation des Elektrodenbandmaterials geeignete Wellenlänge auf, vorzugsweise eine Wellenlänge im grünen oder Infrarot-Bereich (IR), beispielsweise etwa 530 nm oder 1000 nm (Nanometer), auf. Der Laser weist beispielsweise eine Laserleistung im Kilowatt-Bereich (kW) auf.

Im Nachfolgenden sind Angaben hinsichtlich der Raumrichtungen auch insbesondere in einem Koordinatensystem der Vorrichtung angegeben. Die Abszissenachse (X-Achse, X-Richtung) ist hierbei entlang der Vakuumbandlängsrichtung (Förderrichtung) und die Ordinatenachse (Y-Achse, Y-Richtung) entlang der Vakuumbandquerrichtung (Transversalrichtung) sowie die Applikatenachse (Z-Achse, Z-Richtung) senkrecht zu der Ebene des Vakuumbandes orientiert.

Der erste und/oder zweite Laserstrahl werden zur Vereinzelung beispielsweise mittels drei Scannern über das Elektrodenbandmaterial bewegt. Hierbei sind beispielsweise drei Galvo-Scanner (X, Y, Z), insbesondere bei kleinen Batterieelektrodenformaten (kleiner 100 mm), oder zwei Galvo-Scanner (X, Z) und ein Polygon-Scanner (Y) vorgesehen. Ebenso denkbar ist es beispielsweise auch, dass drei Galvoscanner (X, Y, Z) mit einem Polygon-Scanner (Y) gekoppelt werden.

In einer vorteilhaften Ausführung sind erste Laserstrahl und/oder der zweite Laserstrahl mittels mindestens eines Polygon-Scanners bewegbar, wobei der mindestens eine Polygon-Scanner unter einem Winkel zum ersten Vakuumband geneigt angeordnet ist. Der Polygon-Scanner ist also in einem definierten Winkel gekippt zum ersten Vakuumband angeordnet. Der Winkel ist hierbei auf einen kontinuierlichen Bandvorschub des ersten Vakuumbandes, also den Vorschub oder die Geschwindigkeit der Bahnware auf dem Vakuumband, abgestimmt. Insbesondere ist der Winkel in Abhängigkeit des Bandvorschubs des ersten Vakuumbandes und des Laservorschubs des Polygon-Scanners eingestellt.

Dies bedeutet, dass die Laserstrahlen bei einem Stillstand des ersten Vakuumbandes schräg oder schief über das Elektrodenbandmaterial geführt werden würden. In Zusammenwirkung mit dem Bandvorschub wird jedoch eine geradlinige Führung der Laserstrahlen entlang der Schnittstelle realisiert. Der Bandvorschub und der Laservorschub sind also aufeinander abgestimmt.

Werden der oder jeder Laserstrahl mehrmals über die Schnittstelle geführt, wird der Polygon-Scanner geeigneterweise mit jeder Überfahrt eine definierte Distanz entlang der Förderrichtung getaktet nachgeführt, so dass die Laserstrahlen stets die gleiche Schnittfuge oder Schnittkerbe an der Schnittstelle des Elektrodenbandmaterials treffen. Dadurch ist eine besonders hohe Schnittkantenqualität der Batterieelektroden realisierbar.

In einer zweckmäßigen Weiterbildung ist der Schneidspalt schräg zur Förderrichtung des ersten Vakuumbandes orientiert. Der Verlauf des Schneidspalts ist also vorzugsweise an den kontinuierlichen Bandvorschub des ersten Vakuumbandes und den Laservorschub des zweiten Laserstrahls abgestimmt. Dadurch wird die Breite des Schneidspalts weiter reduziert, wodurch eine besonders bauraumkompakte Vorrichtung realisierbar ist.

In einer denkbaren Ausbildung sind der erste Laserstrahl und/oder der zweite Laserstrahl mittels einer Anzahl von sequentiell verschalteten Polygon-Scannern bewegbar. Jeder der Polygon-Scanner ist hierbei vorzugsweise - wie vorstehend erläutert - unter einem definierten Winkel geneigt oder gekippt zum ersten Vakuumband angeordnet. Die Laserstrahlen werden hierbei beispielsweise mittels eines Strahlumschalters auf die unterschiedlichen Polygon-Scanner abgelenkt. Die Anzahl der Polygon-Scanner ist hierbei an eine gewünschte Anzahl an Überfahrten über die Schnittstelle angepasst, so dass thermische Drifts der einzelnen Polygon-Scanner reduziert oder vollständig vermieden werden. Dadurch ist eine Taktzeiterhöhung, und somit ein besonders gleichmäßiger Produktionsfluss bei der Herstellung der Batterieelektroden, ermöglicht.

In einer bevorzugten Anwendung wird eine nach dem vorstehend beschriebenen Verfahren hergestellte Batterieelektrode in einer Fahrzeugbatterie verwendet. Durch das erfindungsgemäße Verfahren ist ein gleichmäßiger Produktionsfluss bei der Herstellung der Batterieelektrode realisiert, bei welchem die mechanische und thermische Beanspruchung des Elektrodenbandmaterials reduziert ist. Die Batterieelektrode weist somit eine besonders hohe Schnittkantenqualität auf, was sich vorteilhaft auf die Qualität und Leistung der damit ausgestatteten Fahrzeugbatterie überträgt.

Nachfolgend ist ein Ausführungsbeispiel der Erfindung anhand einer Zeichnung näher erläutert. Darin zeigen:
- Fig. 1: in Draufsicht eine Vorrichtung zur Herstellung von Batterieelektroden,
- Fig. 2: in Draufsicht einen ersten Verfahrensschritt bei der Herstellung der Batterieelektroden,
- Fig. 3: in Draufsicht einen zweiten Verfahrensschritt bei der Herstellung der Batterieelektroden, und
- Fig. 4: in einer perspektivischen Ansicht einen Polygon-Scankopf zur Laservereinzelung der Batterieelektroden.

Einander entsprechende Teile und Größen sind in allen Figuren stets mit den gleichen Bezugszeichen versehen.

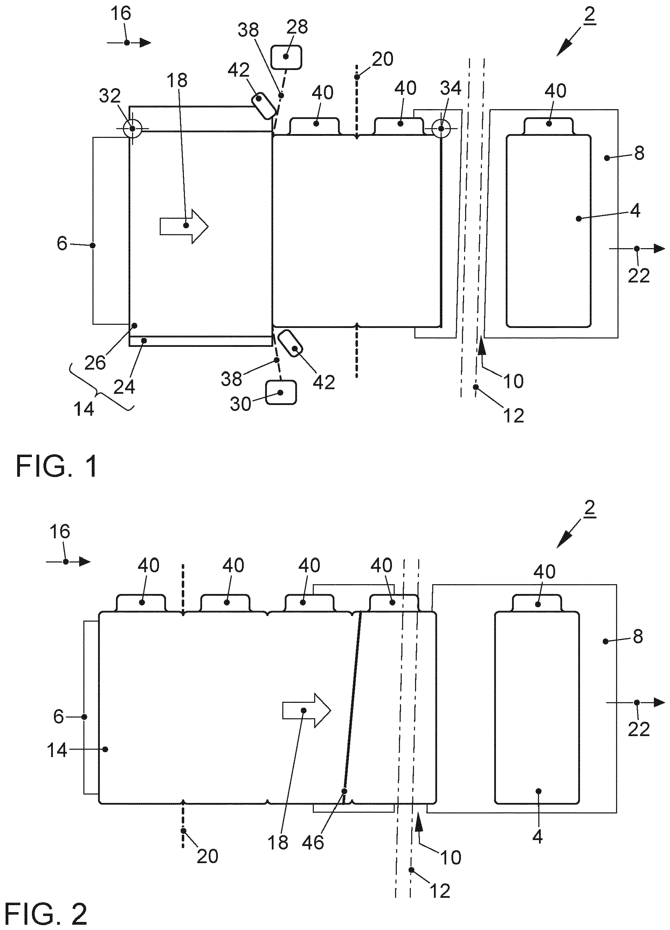

In den Fig.1 bis Fig. 3 ist in vereinfachten und schematischen Darstellungen eine Vorrichtung 2 zur Herstellung von Batterieelektroden 4 gezeigt. Die hergestellten Batterieelektroden 4 weisen hierbei beispielsweise eine Kantenabmessung von mehr als 100 mm, vorzugsweise zwischen 300 bis 600 mm, auf.

Die Vorrichtung 2 weist ein erstes planares Vakuumband 6 und ein zweites planares Vakuumband 8 auf, welche mittels einer Aussparung 10 räumlich voneinander beabstandet sind. Die Aussparung 10 ist hierbei zwischen den einander zugewandten Stirnseiten der Vakuumbänder 6 und 8 angeordnet. Im Bereich der Aussparung 10 ist ein Schneidspalt 12 vorgesehen, welcher in den Figuren strichpunktiert gezeigt ist.

Mittels des Vakuumbandes 6 wird ein Elektrodenbandmaterial 14 zum Schneidspalt 12 entlang einer Förderrichtung 16 mit einem kontinuierlichen Bandvorschub 18 gefördert. Das Elektrodenbandmaterial 14 wird hierbei an vorgegebenen Schnittstellen 20 im Bereich des Schneidspalts 12 zu den Batterieelektroden 4 vereinzelt. Die Schnittstellen 20 sind in den Figuren lediglich beispielhaft mittels strichlinierten Linien dargestellt.

Die Batterieelektroden 4 werden mittels des Vakuumbandes 8 von dem Schneidspalt 12 entlang der Förderrichtung 16 mit einem kontinuierlichen Bandvorschub 22 weg transportiert. Vorzugsweise sind die Bandvorschübe 18 und 22 gleich dimensioniert. Die Vakuumbänder 6 und 8 erzeugen hierbei im Betrieb jeweils einen Unterdruck, mittels welchen das Elektrodenbandmaterial 14 oder die Batterieelektroden 4 fixiert werden.

Das band- oder streifenförmige Elektrodenbandmaterial 14 ist beispielsweise als ein quasi endloses Rollenmaterial (Elektrodencoil, Elektrodenwickel) ausgeführt, und weist eine elektrisch leitfähige Folie 24, beispielsweise eine Kupfer- oder Aluminiumfolie, als Stromableiter, und eine darauf aufgebrachte Aktivmaterialbeschichtung 26 auf.

Die Aktivmaterialbeschichtung 26 ist aus einem Elektrodenmaterial, also aus einem Anodenmaterial oder einem Kathodenmaterial, hergestellt. Das Elektrodenbandmaterial 14 weist hierbei beispielsweise eine Breite von mehr als 100 mm, insbesondere zwischen 300 bis 600 mm, also im Wesentlichen die Kantenlänge der Batterieelektroden 4, auf, wobei die Länge des Elektrodenbandmaterials 14 wesentlich größer als dessen Breite oder dessen Höhe dimensioniert ist.

Die Vorrichtung 2 weist zwei Laseroptiken oder Laserschneidelemente 28, 30 zur Bearbeitung des Elektrodenbandmaterials 14 auf, welche seitlich zum Vakuumband 6 angeordnet sind. Die Vorrichtung 2 weist weiterhin zwei optische Sensormittel 32, 34, beispielsweise in Form von Kameras, auf, welche entlang der Förderrichtung 18 zueinander beabstandet am Vakuumband 6 angeordnet sind.

Das Sensormittel 32 ist am Anfang des Vakuumbandes 6, also beabstandet zum Schneidspalt 12, und das Sensormittel 34 ist am Ende des Vakuumbandes 6, also im Bereich des Schneidspalts 12, angeordnet. Das Sensormittel 32 ist insbesondere für eine Bahnkantensteuerung vorgesehen, und ist zweckmäßigerweise an der Ober- und Unterseite des Vakuumbandes 6 angeordnet. Das Sensormittel 34 ist insbesondere zur Erfassung eines Transversalschnitts vorgesehen, mittels welchen die Batterieelektroden 4 entlang der Schnittstellen 20 von dem Elektrodenbandmaterial 14 abgetrennt oder vereinzelt werden.

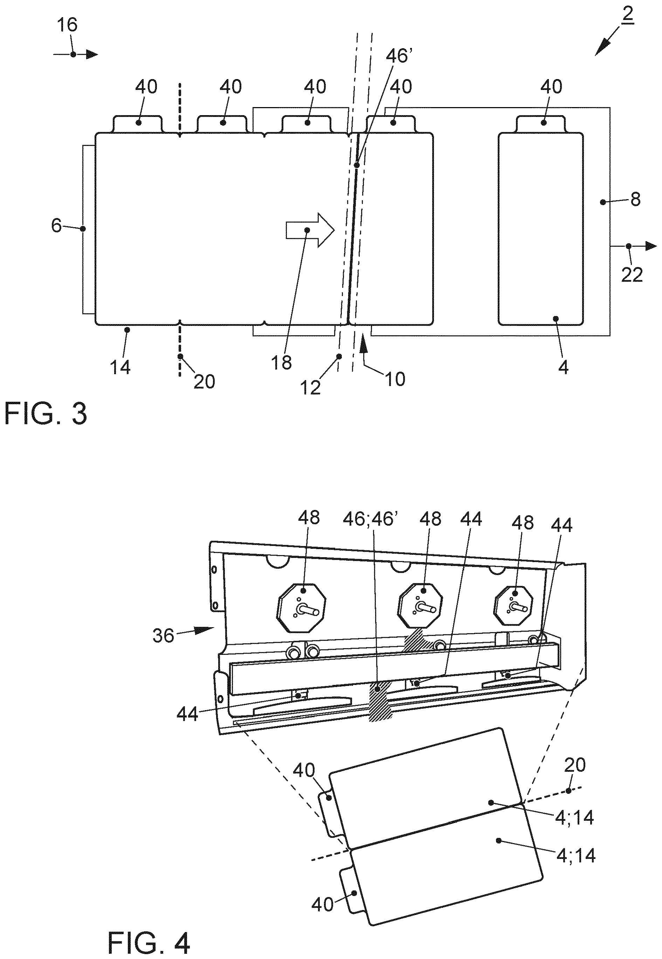

Zur Vereinzelung der Batterieelektroden 4 ist ein Polygon-Scankopf 36 vorgesehen, welcher in Fig. 4 einzeln dargestellt ist.

Das Elektrodenbandmaterial 14 weist beispielsweise entlang seiner Längsrichtung einen nicht beschichteten oder unbeschichteten Randbereich der Folie 24 auf, also einen randseitigen Folienbereich, welcher nicht mit der Aktivmaterialbeschichtung 26 versehen ist. Wie in der Fig. 1 vergleichsweise deutlich ersichtlich ist, wird mittels den Laseroptiken 28 und 30 jeweils ein Laserstrahl 38 erzeugt, mittels welchen ein Ableiterfähnchen 40 zur Kontaktierung der Batterieelektrode 4 sowie abgerundete Eckradien im Bereich der Schnittstellen 20 aus dem Randbereich geschnitten werden. Die Laseroptik 28 schneidet hierbei einen oberen Elektrodenbereich inklusive dem Ableiterfähnchen 40 und Radien, und die Laseroptik 30 schneidet einen unteren Elektrodenbereich auf eine vorgegebene Ziellänge inklusive Radien. Das im Zuge des Laserschneidens oder der Laserbearbeitung ablatierte Material des Elektrodenbandmaterials 14 wird durch zwei Absaugungen 42 mittels eines Luft- oder Blasstroms abgesaugt oder entfernt.

Die Vakuumbänder 6, 8 und die Sensormittel 32, 34 sowie die Laseroptiken 30, 28 und der Polygon-Scankopf 36 sind hierbei signaltechnisch an einen nicht näher gezeigten Controller, also an ein Steuergerät oder eine Steuereinheit, angeschlossen, und von diesem gesteuert und/oder geregelt.

Der in Fig. 4 ausschnittsweise dargestellte Polygon-Scankopf 36 weist in dieser Ausführungsform beispielsweise drei Laser 44 auf. Die Laser 44 erzeugen im Betrieb jeweils einen Laserstrahl 46, 46', wobei in der Fig. 4 lediglich ein aktiver Laser 44 beispielhaft gezeigt ist. Die Laser 44 sind beispielsweise als gepulste Faserlaser ausgeführt, und weisen zum Beispiel eine Wellenlänge im Infrarot-Bereich (IR) auf.

Der Laserstrahl 46, 46' wird auf einen jeweils zugeordneten Polygon-Spiegel als Polygon-Scanner 48 geleitet, welcher den Laserstrahl 46, 46' in Richtung des Elektrodenbandmaterials 14 beziehungsweise der Schnittstelle 20 reflektiert. Der Polygon-Scanner 48 wird im Betrieb rotiert, so dass der Laserstrahl 46, 46' mit einem Laservorschub entlang einer Quer- oder Transversalrichtung, im Wesentlichen senkrecht zu der Förderrichtung 16 bewegt wird. Die Polygon-Scanner 48 weisen hierbei beispielsweise einen Laservorschub von 2 m/s bis 1000 m/s auf. Dadurch werden die Laserstrahlen 46, 46' besonders schnell über die Schnittstellen 20 bewegt, wodurch der Wärmeeintrag, also die thermische Belastung auf das Elektrodenbandmaterial 14 besonders niedrig ist.

In einer denkbaren Ausbildung werden die Laserstrahlen 46, 46' der Laser 44 sequentiell verschaltet mittels der Polygon-Scanner 48 über die Schnittstellen 20 geführt. Dadurch ist eine Taktzeiterhöhung, und somit ein besonders gleichmäßiger Produktionsfluss bei der Herstellung der Batterieelektroden 4, realisiert.

Die Polygon-Scanner 48 sind unter einem Winkel zum Vakuumband 6 geneigt oder gekippt angeordnet ist. Die Neigungs- oder Kippwinkel sind hierbei auf den kontinuierlichen Bandvorschub 18 des Vakuumbandes 6 und den Laservorschub der Polygon-Scanner 48 eingestellt. Dies bedeutet, dass in Zusammenwirkung mit dem Bandvorschub 18 eine geradlinige Führung der Laserstrahlen 46, 46' entlang der Schnittstellen 20 realisiert wird.

Vorzugsweise werden der oder jeder Laserstrahl 46, 46' zur Vereinzelung mehrmals über die jeweilige Schnittstelle 20 geführt, wobei der Polygon-Scankopf 36 geeigneterweise mit jeder Überfahrt eine definierte Distanz entlang der Förderrichtung 16 getaktet nachgeführt wird, so dass die Laserstrahlen 46, 46' stets die gleiche Schnittfuge oder Schnittkerbe an der Schnittstelle des Elektrodenbandmaterials 14 treffen.

Nachfolgend ist anhand der Figuren 2 und 3 das erfindungsgemäße Verfahren zur Herstellung der Batterieelektroden 4 näher erläutert.

Die Fig. 2 zeigt einen ersten Verfahrensschritt des Verfahrens, bei welchem die Aktivmaterialbeschichtung 26 an einer Schnittstelle 20 mit ersten Laserstrahlen 46 der Laser 44 des Polygon-Scankopfs 36 teilweise ablatiert wird, bevor die Schnittstelle 20 den Schneidspalt 12 erreicht. Dies bedeutet, dass durch die Laserstrahlen 46 eine Schnittfuge oder Schnittkerbe in die Aktivmaterialbeschichtung 26 im Bereich der jeweiligen Schnittstelle 20 eingebracht wird. Vorzugsweise wird hierbei etwa 40% bis 99% der Aktivmaterialbeschichtung 26 ablatiert. Da das Elektrodenbandmaterial 14 hierbei nicht vollständig durchtrennt, sondern lediglich teilweise ablatiert wird, ist kein Schneidspalt beim Laserablatieren während des ersten Verfahrensschritts notwendig.

Die Laserstrahlen 46 werden während des ersten Verfahrensschritts mehrmals hintereinander über die Schnittstelle 20 geführt. Es wird also eine Mehrfachüberfahrt der Schnittstelle 20 mit dem Laserstrahlen 46 durchgeführt. In einer geeigneten Ausführung werden die Laserstrahlen 46 hierbei zwischen 1 und 100-mal über die Schnittstelle 20 bewegt.

In der Fig. 3 ist ein auf den ersten Verfahrensschritt nachfolgender zweiter Verfahrensschritt gezeigt, bei welchem die Aktivmaterialbeschichtung 26 und die Folie 24 des Elektrodenbandmaterials 14 an der Schnittstelle 20 mit zweiten Laserstrahlen 46' vollständig durchtrennt werden, wenn die Schnittstelle 20 den Bereich des Schneidspalts 12 überfährt. Der Schneidspalt 12 ist hierbei schräg zur Förderrichtung 16 des Vakuumbandes 6 orientiert, und ist somit an den kontinuierlichen Bandvorschub 18 des Vakuumbandes 6 und den Laservorschub der zweiten Laserstrahlen 46' abgestimmt.

Die Laserstrahlen 46' werden hierbei während des zweiten Verfahrensschritts mehrmals hintereinander über die zu durchtrennende Schnittstelle 20 geführt. Die Anzahl der Mehrfachüberfahrten ist hierbei vorzugsweise geringer als im ersten Verfahrensschritt ist. Beispielsweise werden die Laserstrahlen 46'zwischen 1 und 20-mal über die Schnittstelle 20 bewegt.

Durch die Mehrfachüberfahrten während des ersten und/oder zweiten Verfahrensschritts ist eine Kalt-Ablation des Elektrodenbandmaterials 14, also eine Ablation mit einer besonders geringen Wärmeeintragszone ermöglicht. Dadurch ist die Durchtrennung, also der abtrennende oder durchtrennende Laserschnitt mit einer geringen oder moderaten Laserleistung realisierbar, wodurch eine besonders hohe Schnittkantenqualität der vereinzelten Batterieelektroden 4 gewährleistet wird.

Die Mehrfachüberfahrten erfolgen hierbei im Wesentlichen ohne eine Unterbrechung der Förderung der Vakuumbänder 6, 8. Mit anderen Worten erfolgt die Vereinzelung der Batterieelektroden 4 ohne dass die Vakuumbänder 6, 8 gebremst oder gestoppt werden. Die Laservereinzelung der Batterieelektroden 4 erfolgt somit "on-the-fly" während einer kontinuierlichen Förderung des Elektrodenbandmaterials 14.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit dem Ausführungsbeispiel beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Vorrichtung
- 4: Batterieelektrode
- 6, 8: Vakuumband
- 10: Aussparung
- 12: Schneidspalt
- 14: Elektrodenbandmaterial
- 16: Förderrichtung
- 18: Bandvorschub
- 20: Schnittstelle
- 22: Bandvorschub
- 24: Folie
- 26: Aktivmaterialbeschichtung
- 28, 30: Laseroptik
- 32, 34: Sensormittel
- 36: Polygon-Scankopf
- 38: Laserstrahl
- 40: Ableiterfähnchen
- 42: Absaugung
- 44: Laser
- 46, 46': Laserstrahl
- 48: Polygon-Scanner

## Patentansprüche

1. Verfahren zur Herstellung von Batterieelektroden (4), bei welchem ein Elektrodenbandmaterial (14) mit einer Folie (24) und mit einer darauf aufgebrachten Aktivmaterialbeschichtung (26) an vorgegebenen Schnittstellen (20) zu einer Anzahl von Batterieelektroden (4) vereinzelt wird,
- wobei das Elektrodenbandmaterial (12) auf einem planaren Vakuumband (6) entlang einer Förderrichtung (16) zu einem Schneidspalt (12) gefördert wird,
- wobei in einem ersten Verfahrensschritt die Aktivmaterialbeschichtung (26) einer Schnittstelle (20) mit einem ersten Laserstrahl (46) teilweise ablatiert wird, bevor die Schnittstelle (20) den Schneidspalt (12) erreicht, und
- wobei in einem zweiten Verfahrensschritt die Aktivmaterialbeschichtung (26) und die Folie (24) der Schnittstelle (20) mit einem zweiten Laserstrahl (46') vollständig durchtrennt wird, wenn die Schnittstelle (20) im Bereich des Schneidspalts (12) ist.

2. Verfahren nach Anspruch 1,
**dadurch gekennzeichnet,**
**dass** der erste Laserstrahl (46) und/oder der zweite Laserstrahl (46') mittels eines Polygon-Scanners (48) entlang der Schnittstelle (20) bewegt wird.

3. Verfahren nach Anspruch 1 oder 2,
**dadurch gekennzeichnet,**
**dass** der erste Laserstrahl (46) während des ersten Verfahrensschritts mehrmals hintereinander über die Schnittstelle (20) geführt wird.

4. Verfahren nach Anspruch 1 bis 3,
**dadurch gekennzeichnet,**
**dass** der zweite Laserstrahl (46') während des zweiten Verfahrensschritts mehrmals hintereinander über die Schnittstelle (20) geführt wird.

5. Verfahren nach einem der Ansprüche 1 bis 4,
**dadurch gekennzeichnet,**
**dass** der erste Verfahrensschritt und/oder der zweite Verfahrensschritt ohne Unterbrechung der Förderung des Vakuumbandes (6) durchgeführt werden.

6. Vorrichtung (2) zur Herstellung von Batterieelektroden (4), aufweisend
- ein Elektrodenbandmaterial (14) mit einer Folie (24) und mit einer darauf aufgebrachten Aktivmaterialbeschichtung (26) sowie mit einer Anzahl von vorgegebenen Schnittstellen (20),
- ein erstes planares Vakuumband (6) zur Förderung des Elektrodenbandmaterials (14) entlang einer Förderrichtung (18), und ein zweites planares Vakuumband (8) zur Förderung vereinzelter Batterieelektroden (4), sowie mit einem zwischen diesen angeordneten Schneidspalt (12),
- mindestens einen Laser (44) zur Erzeugung eines ersten und zweiten Laserstrahls (46, 46') zur Durchtrennung der Schnittstellen (20), wobei der erste Laserstrahl (46) die Aktivmaterialbeschichtung (26) teilweise ablatiert bevor die Schnittstelle (20) den Schneidspalt (12) erreicht, und wobei der zweite Laserstrahl (46') die Schnittstelle (20) vollständig durchtrennt, wenn die Schnittstelle (20) im Bereich des Schneidspalts (12) ist, und
- einen Controller zur Durchführung eines Verfahrens nach einem der Ansprüche 1 bis 5

7. Vorrichtung (2) nach Anspruch 6,
**dadurch gekennzeichnet,**
**dass** der erste Laserstrahl (46) und/oder der zweite Laserstrahl (46') mittels mindestens eines Polygon-Scanners (48) bewegbar sind, wobei der mindestens eine Polygon-Scanner (48) unter einem Winkel zum ersten Vakuumband (6) geneigt angeordnet ist.

8. Vorrichtung (2) nach Anspruch 6 oder 7,
**dadurch gekennzeichnet,**
**dass** der Schneidspalt (12) schräg zur Förderrichtung (18) verläuft.

9. Vorrichtung (2) nach einem der Ansprüche 6 bis 8,
**dadurch gekennzeichnet**
**dass** der erste Laserstrahl (46) und/oder der zweite Laserstrahl (46') mittels einer Anzahl von sequentiell verschalteten Polygon-Scanner (48) bewegbar sind.

## Claims

1. Method for producing battery electrodes (4), in which an electrode strip material (14) with a foil (24) and with an active material coating (26) applied thereto is separated at predetermined cutting points (20) to form a number of battery electrodes (4),
- wherein the electrode strip material (12) is conveyed on a planar vacuum belt (6) along a conveying direction (16) to a cutting gap (12),
- wherein, in a first method step, the active material coating (26) of a cutting point (20) is partially ablated with a first laser beam (46) before the cutting point (20) reaches the cutting gap (12), and
- wherein, in a second method step, the active material coating (26) and the foil (24) of the cutting point (20) are completely severed with a second laser beam (46') when the cutting point (20) is in the region of the cutting gap (12).

2. Method according to claim 1,
**characterized in**
**that** the first laser beam (46) and/or the second laser beam (46') is moved along the cutting point (20) by means of a polygon scanner (48).

3. Method according to claim 1 or 2,
**characterized in**
**that** the first laser beam (46) is guided over the cutting point (20) several times in succession during the first method step.

4. Method according to claim 1 to 3,
**characterized in**
**that** the second laser beam (46') is guided over the cutting point (20) several times in succession during the second method step.

5. Method according to one of claims 1 to 4,
**characterized in**
**that** the first method step and/or the second method step are carried out without interrupting the conveyance of the vacuum belt (6).

6. Device (2) for producing battery electrodes (4), comprising
- an electrode strip material (14) with a foil (24) and with an active material coating (26) applied thereto and with a number of predetermined cutting points (20),
- a first planar vacuum belt (6) for conveying the electrode belt material (14) along a conveying direction (18), and a second planar vacuum belt (8) for conveying individual battery electrodes (4), and with a cutting gap (12) arranged between them,
at least one laser (44) for generating first and second laser beams (46, 46') for cutting through the cutting points (20), wherein the first laser beam (46) partially ablates the active material coating (26) before the cutting point (20) reaches the cutting gap (12), and wherein the second laser beam (46') completely severs the cutting point (20) when the cutting point (20) is in the region of the cutting gap (12), and
- a controller for carrying out a method according to one of claims 1 to 5

7. Device (2) according to claim 6,
**characterized in**
**that** the first laser beam (46) and/or the second laser beam (46') can be moved by means of at least one polygon scanner (48), wherein the at least one polygon scanner (48) is arranged inclined at an angle to the first vacuum belt (6).

8. Device (2) according to claim 6 or 7,
**characterized in**
**that** the cutting gap (12) extends obliquely to the conveying direction (18).

9. Device (2) according to one of claims 6 to 8,
**characterized in**
**that** the first laser beam (46) and/or the second laser beam (46') can be moved by means of a number of sequentially connected polygon scanners (48).

## Revendications

1. Procédé de fabrication d'électrodes de batterie (4), dans lequel un matériau de bande d'électrode (14) avec une feuille (24) et avec un revêtement de matériau actif (26) appliqué sur celui-ci est séparé au niveau de points de coupes prédéterminées (20) pour former un certain nombre d'électrodes de batterie (4),
- dans lequel le matériau de bande d'électrode (12) est transporté sur une courroie à vide (6) plane le long d'une direction de transport (16) jusqu'à un espace de coupe (12),
- dans lequel, dans une première étape du procédé, le revêtement de matériau actif (26) d'un point de coupe (20) est partiellement ablaté avec un premier faisceau laser (46) avant que le point de coupe (20) n'atteigne l'espace de coupe (12), et
- dans lequel, dans une deuxième étape du procédé, le revêtement de matériau actif (26) et la feuille (24) du point de coupe (20) sont complètement coupés avec un deuxième faisceau laser (46') lorsque la point de coupe (20) se trouve dans la zone de l'espace de coupe (12).

2. Procédé selon la revendication 1,
**caractérisé en ce**
**que** le premier faisceau laser (46) et/ou le deuxième faisceau laser (46') est déplacé le long du point de coupe (20) au moyen d'un scanner de polygones (48).

3. Procédé selon la revendication 1 ou 2,
**caractérisé en ce**
**que** le premier faisceau laser (46) est guidé sur le point de coupe (20) plusieurs fois de suite pendant la première étape du procédé.

4. Procédé selon la revendication 1 à 3,
**caractérisé en ce**
**que** le deuxième faisceau laser (46') est guidé sur le point de coupe (20) plusieurs fois de suite pendant la deuxième étape du processus.

5. Procédé selon l'une des revendications 1 à 4,
**caractérisé en ce**
**que** la première étape du processus et/ou la deuxième étape du processus sont réalisées sans interrompre le transport de la bande à vide (6).

6. Dispositif (2) de fabrication d'électrodes de batterie (4), comprenant
- un matériau de bande d'électrode (14) avec une feuille (24) et avec un revêtement de matériau actif (26) appliqué sur celui-ci et avec un certain nombre de points de coupe prédéterminées (20),
- une première bande à vide (6) plane pour transporter le matériau de bande d'électrodes (14) le long d'une direction de transport (18), et une deuxième bande à vide plane (8) pour transporter des électrodes de batterie individuelles (4), et avec un espace de coupe (12) disposé entre elles,
au moins un laser (44) pour générer des premier et deuxième faisceaux laser (46, 46') pour la coupe des points de coupes (20), dans lequel le premier faisceau laser (46) ablate partiellement le revêtement de matériau actif (26) avant que le point de coupe (20) n'atteigne l'espace de coupe (12), et dans lequel le deuxième faisceau laser (46') coupe complètement le point de coupe (20) lorsque l'emplacement de coupe (20) est dans la région de l'espace de coupe (12), et
- un contrôleur pour réaliser le procédé selon l'une des revendications 1 à 5.

7. Dispositif (2) selon la revendication 6,
**caractérisé en ce**
**que** le premier faisceau laser (46) et/ou le deuxième faisceau laser (46') peuvent être déplacés au moyen d'au moins un scanner polygonal (48), dans lequel le au moins un scanner polygonal (48) est disposé de manière inclinée par rapport à la première bande de vide (6).

8. Dispositif (2) selon la revendication 6 ou 7,
**caractérisé en ce**
**que** l'espace de coupe (12) s'entend obliquement par rapport à la direction de transport (18).

9. Dispositif (2) selon l'une des revendications 6 à 8,
**caractérisé en ce**
**que** le premier faisceau laser (46) et/ou le deuxième faisceau laser (46') peuvent être déplacés au moyen d'un certain nombre de scanners de polygones (48) connectés séquentiellement.
